Europäisches Patentamt

European Patent Office

Office européen des brevets

Veröffentlichungsnummer: **0 287 923**
**A2**

# EUROPÄISCHE PATENTANMELDUNG

Anmeldenummer: **88105750.9**

Anmeldetag: **12.04.88**

Int. Cl.4 **F23M 13/00 , F23J 15/00 , B60H 1/22**

Priorität: **22.04.87 DE 3713476**
**22.04.87 DE 3713448**

Veröffentlichungstag der Anmeldung:
**26.10.88 Patentblatt 88/43**

Benannte Vertragsstaaten:
**DE FR GB SE**

Anmelder: **Webasto AG Fahrzeugtechnik**
**Kraillinger Strasse 5 Stockdorf**
**D-8035 Gauting 2(DE)**

Erfinder: **Panick, Karl**
**Schulangerweg 4**
**D-8033 Planegg(DE)**
Erfinder: **Widemann, Friedrich**
**Siegmannstrasse 14**
**D-8000 München 60(DE)**
Erfinder: **Schönberger, Hermann**
**Keltenstrasse 5**
**D-8034 Germering(DE)**
Erfinder: **Sperl, Johann**
**An der Freiheit 65**
**D-8122 Penzberg(DE)**
Erfinder: **Sondermeier, Johann**
**Heimstrasse 9**
**D-8033 Krailling(DE)**

Heizgerät, insbesondere Fahrzeugzusatzheizgerät.

Nach der Erfindung wird ein Heizgerät, insbesondere ein Fahrzeugzusatzheizgerät bereitgestellt, bei dem eine Schalldämpfungseinrichtung im Heizgerät eingebaut ist. Hierbei kann in der Brennkammer ein Schalldämpfer vorgesehen sein oder die Brennkammer selbst kann als Schalldämpfer ausgebildet sein. Der Schalldämpfer kann hierbei das Verbrennungsgeräusch und oder die Verbrennungsgasgeräusche durch Absorption und oder durch Reflexion dämpfen. Ferner kann der Schalldämpfer auch derart ausgelegt sein, daß er zugleich die Verbrennungsgase reinigt, beispielsweise durch katalytische Nachverbrennung und oder durch Ausfilterung von Rußpartikeln, wenn das Heizgerät mit Dieselbrennstoff als flüssigem Brennstoff betrieben wird. Da der Schalldämpfer in der heißen Zone jedoch nicht im Flammenbereich der Brennkammer angeordnet ist, wird er nicht direkt durch die hohen Flammentemperaturen beaufschlagt, aber es wird dennoch aufgrund der relativ hohen Temperaturen eine Selbstreinigung des Schalldämpfers bewirkt, so daß er über lange Betriebszeiten hinweg zuverlässig und wirksam arbeiten kann. Bei einer Ausführungsvariante wird das Abgas im Abgassammelraum vor dem Austritt aus dem Heizgerät geräuschgedämpft, um ein leises Arbeiten eines solchen Heizgeräts zu erreichen. Auch kann ein sonst üblicher in der Abgasleitung des Heizgeräts liegender Schalldämpfer entfallen. Zur Schalldämpfung kann - schalldämmendes Material im Abgassammelraum angeordnet werden. Die Schalldämpfung kann basierend auf der Reflexion und oder Absorption und oder noch weiteren üblichen Methoden bewirkt werden.

FIG 1

## Heizgerät, insbesondere Fahrzeugzusatzheizgerät

Die Erfindung befaßt sich mit einem Heizgerät, insbesondere einem Fahrzeugzusatzheizgerät, das mit flüssigem oder gasförmigem Brennstoff betreibbar ist. Üblicherweise hat ein solches Heizgerät einen Brenner und eine Brennkammer, die von einem Brennrohr begrenzt ist.

Aus DE-OS 35 32 777 ist ein Brenner bekannt, bei dem im Bereich der Flamme eine hülsenartige Blende angeordnet ist, mit der die Heißgase trichterförmig zu Blendenschlitzen geführt werden. Diese Blende wirkt als Flammenteiler und sie ermöglicht eine akustische Entkopplung des Brenners von weiteren Aggregaten, wie Kesselraum bzw. einem Feuerraum. Hierdurch kann eine Geräuschdämpfung des Brenners herbeigeführt werden. Die in der Flammenzone des Brenners angeordnete Blende ist ferner geeignet, als Katalysatorträger zu dienen, wenn dies zur Reduzierung von Schadstoffen notwendig ist. Hierzu kann eine Beschichtung mit einem katalytisch wirkenden Material an der dem Verbrennungsraum zugekehrten Seite der Blende vorgesehen sein.

Aus DE-OS 34 13 968 sowie DE-GM 84 10 034 sind in der Brennkammer und insbesondere im Bereich der Flammenzone Stauscheiben angeordnet, die einen Abgaskatalysator zur Beseitigung von schädlichen Bestandteilen der Brenngase, insbesondere von NOx, tragen.

In DE-OS 34 25 259 ist ein Wärmeerzeuger mit Überdruckfeuerung auf Öl-oder Gasbasis mit einer Brennkammer und einer Umlenkkammer beschrieben. Zur Entgiftung der Abgase wird in der Umlenkkammer ein Katalysator angeordnet, der zweckmäßig als Beschichtung auf der Wand der Umlenkkammer und/oder auf der Außenfläche eines Innenzylinders in der Brennkammer aufgebracht ist.

Bei den bisher üblichen Heizgeräten, insbesondere den Fahrzeugzusatzheizgeräten, ist zur Dämpfung der Verbrennungsgeräusche ein Abgasschalldämpfer vorgesehen, der extern vom Heizgerät innerhalb einer Abgasleitung installiert ist. Ein solcher Abgasschalldämpfer stellt ein separates Bauteil dar, das gesondert hergestellt und montiert werden muß. Insbesondere ist ein solcher Schalldämpfer sowohl von innen als auch von außen der Korrosion ausgesetzt. Ferner können sich in der Startphase des Heizgeräts, im Teillastbereich sowie auch bei niedriger Außentemperatur Schwierigkeiten durch nasse Abgase infolge der Unterschreitung des Taupunkts ergeben. Dies kann zu Vereisungen und Widerstandserhöhungen im Bereich des extern angeordneten Abgasschalldämpfers führen. Hierdurch erhält man eine Verschlechterung der Verbrennung und im Extremfall kann das Heizgerät sogar ausfallen.

Die Erfindung zielt darauf ab, unter Überwindung der zuvor geschilderten Schwierigkeiten, ein Heizgerät, insbesondere ein Fahrzeugheizgerät, bereitzustellen, bei dem eine Schalldämpfung ohne die Verwendung eines externen Abgasschalldämpfers erreicht wird. Ferner soll nach der Erfindung die Auslegung des Heizgeräts auch derart getroffen werden, daß gegebenenfalls die Verbrennungsgase von schädlichen Bestandteilen, wie CO u.dgl.,sowie gegebenenfalls von Rußpartikeln befreit werden.

Nach der Erfindung zeichnet sich ein Heizgerät, insbesondere ein Fahrzeugzusatzheizgerät, mit einem Brenner und einer Brennkammer, die von einem Brennrohr begrenzt ist, dadurch aus, daß im Heizgerät ein Schalldämpfer eingebaut ist. Hierdurch vereinfacht sich die Herstellung, da man keinen externen und separat zu montierenden Schalldämpfer benötigt. Zweckmäßigerweise wird die Brennkammer als Schalldämpfer ausgebildet. Beim erfindungsgemäßen Heizgerät lassen sich daher die Schalldämpfungsmaßnahmen bereits im Brennkammerbereich des Heizgeräts verwirklichen, so daß ein extern angeordneter Abgasschalldämpfer entfallen kann. Hierdurch vereinfacht sich nicht nur der Einbau eines solchen Heizgeräts. sondern es ergeben sich auch Vorteile dahingehend, daß die Verbrennungsgeräusche des Brenners des Heizgeräts unmittelbar in der Nähe des Entstehungsortes gedämpft werden, so daß der Geräuschpegel eines solchen Heizgeräts im Betriebszustand in überraschender Weise nennenswert herabgesetzt werden kann. Insbesondere ist beim erfindungsgemäßen Heizgerät der Schalldämpfer in der Brennkammer im flammenlosen Bereich, jedoch in einem relativ heißen Bereich der Brennkammer angeordnet, in dem beispielsweise Temperaturen von 1000 bis 1200 °C herrschen. Wenn der Schalldämpfer in einem derartig heißen Bereich der Brennkammer angeordnet ist, wird in überraschender Weise eine Selbstreinigung des Schalldämpfers während des Betriebs des Heizgeräts verwirklicht, so daß sich das Schalldämpfermaterial nicht zusetzen kann und zuverlässig über lange Zeit hinweg eine wirksame Schalldämpfung und/oder gegebenenfalls auch eine Abgasreinigung gewährleistet werden kann.

Gemäß einer bevorzugten Ausbildungsform nach der Erfindung dient der Schalldämpfer auch zugleich zur Reinigung der Verbrennungsgase, wobei eine katalytische Umwandlung von schädlichen Verbrennungsgasbestandteilen erfolgen kann. Bei einem mit Diesel-Brennstoff als flüssigem Brennstoff betriebenen Heizgerät können mit Hilfe des Schalldämpfers Rußpartikel aus den Verbrennungsgasen ausgefiltert werden, wobei das Filtermaterial selbsttätig durch die Anordnung im heißen Bereich der Brennkammer wieder von den ausgefilterten Rußpartikeln freigebrannt wird.

Der Schalldämpfer in der Brennkammer bei dem erfindungsgemäßen Heizgerät kann entweder als Reflexions-Schalldämpfer und/oder als Absorptions-Schalldämpfer ausgebildet sein, wobei natürlich auch beide Schalldämpferprinzipien miteinander verknüpft werden können.

Vorzugsweise besteht der Schalldämpfer aus hitzebeständigem, gelochtem oder porösem Material, das zugleich auch eine Filterfunktion hat und dank seiner gelochten oder porösen Ausbildung eine effektive Schalldämpfung gewährleistet.

Gemäß einer bevorzugten Ausbildungsform wird der Schalldämpfer von einer Auskleidung des Brennrohrs und/oder des Flammhaltereinsatzes gebildet, so daß diese Teile in der Brennkammer des Heizgeräts zugleich als Träger für den Schalldämpfer dienen.

Hierbei kann die Auskleidung zweckmäßigerweise von einem Vliesrohr gebildet werden, das man dadurch erhält, daß man Vlieswerkstoff, der hitzebeständig ist, mit einem Härter tränkt und hierdurch ein rohrförmiges Gebilde erhält.

Um möglichst die gesamte axiale Längserstreckung der Brennkammer für die Schalldämmung und/oder Verbrennungsgasreinigung zu nutzen, hat das Vliesrohr vorzugsweise eine axiale Länge, die größer als die Länge des Brennrohrs ist, so daß das freie Ende des Vliesrohrs beispielsweise am Wärmeübertragerboden dicht anliegen kann. Hierbei werden die Verbrennungsgase am Ende der Brennkammer gezwungen, durch den Schalldämpfer durchzugehen, bevor sie zum Einleiten in den Wärmetauscher umgelenkt werden.

Gemäß einer vorteilhaften Ausgestaltung nach der Erfindung hat die Auskleidung wenigstens im Bereich des Brennkammerauslaßendes radiale und in Umfangsrichtung verteilte Durchgangsöffnungen. Vorzugsweise sind die radialen Öffnungen in mehreren, axial beabstandeten Öffnungsreihen in Öffnungsrichtung verteilt angeordnet, wobei die Öffnungen benachbarter Öffnungsreihen vorzugsweise in Umfangsrichtung versetzt zueinander liegen. Bei einer solchen Ausbildungsform wird eine Schalldämpfung durch Reflexion und Absorption in kombinierter Weise erreicht.

Eine alternative Ausführungsform eines Heizgeräts mit integriertem Schalldämpfer zeichnet sich dadurch aus, daß im Bereich des Brennrohres ein oder mehrere Schalldämpfereinsätze angeordnet sind, die den Schalldämpfer bilden und die sich über den Querschnitt des Brennrohrs erstrecken. Der oder jeder Schalldämpfereinsatz hat ein oder mehrere über die Querschnittsfläche verteilte axiale Durchgangsöffnungen. Ein solcher Schalldämpfer arbeitet als Reflexions-Schalldämpfer.

Vorzugsweise sind hierbei die axialen Durchgangsöffnungen benachbarter Schalldämpfereinsätze versetzt zueinander angeordnet und der oder jeder Schalldämpfereinsatz umfaßt ein mit axialen Durchgangsöffnungen versehenes Lochblech als Halter und darauf angebrachtes schalldämmendes Material. Das schalldämmende Material kann in diesem Fall Vlieswolle sein.

Vorzugsweise dient das schalldämmende Material zugleich dazu, daß die durchströmenden Verbrennungsgase katalytisch behandelt werden. Hierbei kann die Auslegung derart getroffen werden, daß Schichten aus schalldämmendem Material und Schichten aus katalytischem Werkstoff über die Querschnittsfläche verteilt, vorzugsweise abwechselnd zueinander angeordnet sind.

Bei allen vorangehend erläuterten bevorzugten Ausführungsvarianten kann das schalldämmende Material von einem schalldämmenden Vliesmaterial gebildet werden, das am Brennrohr und/oder am Flammhaltereinsatz durch Ankleben befestigt ist.

Hierdurch erübrigen sich zusätzliche Schalterbauteile im Bereich der Brennkammer und der Schalldämpfer kann äußerst platzsparend in der Brennkammer untergebracht werden, ohne den Verbrennungswirkungsgrad nennenswert zu beeinflussen.

Selbstverständlich läßt sich ein solcher Schalldämpfer nicht nur bei einem mit gasförmigem Wärmeträger arbeitendem Heizgerät, wie einem Luft-Heizgerät, sondern auch bei einem mit flüssigem Wärmeträger arbeitendem Heizgerät, wie einem Wasser-Heizgerät anwenden. Ferner lassen sich die erfindungsgemäßen Maßnahmen sowohl bei einem mit flüssigem Brennstoff als auch bei einem mit gasförmigem Brennstoff betriebenen Heizgerät verwirklichen.

Gemäß einem weiteren Aspekt nach der Erfindung wird ein Heizgerät, insbesondere ein Fahrzeugzusatzheizgerät, mit einem Brenner und einer Brennkammer, aus der heiße Verbrennungsgase austreten, durch einen Wärmetauscher gehen und in einen Abgassammelraum in Höhe des Brenners vor dem Austritt aus dem Heizgerät über einen Verbrennungsgasauslaß gelangen, angegeben, bei dem der Abgassammelraum als Schalldämpfer ausgebildet ist.

Hierbei wird ein Heizgerät der gattungsgemäßen Art bereitgestellt, das unter herstellungstechnischer Vereinfachung und montagetechnischen Einsparungen eine wirksame Dämpfung der Abgasgeräusche gestattet.

Bei einem solchen erfindungsgemäßen Heizgerät sind die Maßnahmen zur Abgasschalldämpfung in das Heizgerät selbst integriert, so daß ein zusätzliches Bauteil entfällt und sich der Einbau eines solchen Heizgeräts vereinfacht. Da ferner die Geräusche der Verbrennungsgase unmittelbar nach dem Durchgang durch den Wärmetauscher und vor dem Verlassen des Heizgeräts gedämpft werden, erhält man in überraschender Weise auch ein sehr geräuscharm arbeitendes Heizgerät, da die Verbrennungsgasgeräusche kaum mehr wahrgenommen werden können.

Der Schalldämpfer in dem Abgassammelraum kann eine Schalldämpfung, basierend auf den Prinzipien der Reflexion und/oder Absorption und/oder nach Helmholtz unter Verwendung eines Hohlraumresonators bewirken. Somit können bei der Schalldämpfung im Abgassammelraum die wesentlichen grundlegenden Schalldämpfungsmethoden einzeln oder auch in Verbindung miteinander derart angewandt werden, daß mit optimaler Ausnutzung des im Abgassammelraum zur Verfügung stehenden Raumes eine äußerst wirksame und zuverlässige Schalldämpfung erreicht wird.

Vorzugsweise wird in dem Abgassammelraum ein schalldämmendes Material angeordnet, das beispielsweise in Form einer Ringscheibe ausgebildet sein kann. Eine solche Auslegungsform ist konstruktiv sehr einfach zu verwirklichen und Versuche haben gezeigt, daß man hierbei eine zufriedenstellende Schalldämpfung erzielen kann. Auch handelt es sich hierbei um eine sehr kostengünstige Lösung, da man nur schalldämmendes Material benötigt, das nicht einmal hoch hitzebeständig zu sein braucht, da sich die Verbrennungsgase beim Durchgang durch den Wärmetauscher bereits abgekühlt haben. Auch wird die Taupunktsgefahr vermindert.

Gemäß einer vorteilhaften Ausbildungsform liegt das schalldämmende Material an der vom Wärmeübertrager abgewandten Wand des Abgassammelraums an und es hat von dem Wärmeübertrager in axialer Richtung einen Abstand. Bei einer solchen Anordnung des schalldämmenden Materials wird zugleich noch der Wärmefluß der Verbrennungsgase im Abgassammelraum zu der naheliegenden Brennereinrichtung unterbrochen, so daß man zugleich mit der Schalldämpfung auch eine Wärmeisolierung des Brenners erreicht.

Gemäß einer vorteilhaften Ausgestaltung der Erfindung ist das schalldämmende Material mit Öffnungen versehen, die in axialer Verlängerung zu den Verbrennungsgaskanälen des Wärmetauschers verlaufen. Bei einer solchen Auslegung kann somit jeder Verbrennungsgasteilstrom zwischen zwei benachbarten Rippen des Wärmetauschers beispielsweise in eine zugeordnete Öffnung in dem schalldämmenden Material einströmen, um unter Ausnutzung von Reflexion und Absorption eine wirksame Schalldämpfung zu gewährleisten.

Vorzugsweise ist das schalldämmende Material an einem Halter angebracht, der in den Abgassammelraum ragt, so daß das schalldämmende Material so in dem Abgassammelraum angeordnet werden kann, daß es eine für die Schalldämpfung durch Absorption und durch Reflexion optimale Lage im Abgassammelraum einnimmt.

Gemäß einer weiteren Ausgestaltungsform eines Heizgeräts nach der Erfindung wird der Schalldämpfer nicht im Abgassammelraum angeordnet, sondern er liegt in jenem Bereich des Abgasstromes, der unmittelbar vor dem Abgassammelraum liegt.

Da beispielsweise der Teil der Rippen auf dem Umfang des Wärmetauschers, die die Verbrennungsgaskanäle oder Rauchgaskanäle begrenzen, welcher in Rauchgasströmungsrichtung vor dem Abgassammelraum liegt, nur noch einen sehr geringen Beitrag zu dem Wärmeübergang und der Wärmeübertragung an das Heizmedium leistet, können in diesem Bereich die Rippen weggelassen werden, so daß ein Zwischenraum vorhanden ist, der dann als Aufnahme für den Schalldämpfer dient. Hierbei lassen sich möglicherweise auftretende Schwierigkeiten im Hinblick auf eine gegebenenfalls erforderliche Vergrößerung des Abgassammelraumes, wenn in diesem der Schalldämpfer angeordnet ist, vermeiden und insbesondere ist es dann nicht erforderlich, daß man den Durchmesser des Heizgeräts erweitert oder seine Länge größer wählen muß. Auch bei einer solchen Auslegung erhält man einen relativ großen Querschnitt für den Schalldämpfer, so daß seine Wirksamkeit verbessert werden kann.

Zur Fixierung des Schalldämpfers in seiner Lage kann es zweckmäßig sein, wenigstens eine oder gegebenenfalls mehrere Rippen auf dem Umfang des Wärmetauschers so in axialer Richtung zu verlängern, daß der Schalldämpfer formschlüssig und/oder kraftschlüssig aufgenommen ist. Das schalldämmende Material ist ähnlich wie bei der Anordnung des Schalldämpfers im Abgassammelraum niedrigeren Temperaturen nach dem Wärmeaustausch der heißen Verbrennungsgase am Wärmetauscher ausgesetzt, so daß das schalldämmende Material nicht so stark gefährdet ist.

Wenn eine Rauchgasumlenkung vor dem Austritt aus dem Abgasauslaß des Heizgerätes erfolgen soll, so wird diese Rauchgasumlenkung bei einer derartigen Anordnung des Schalldämpfers durch diesen bewirkt, und bisher benötigte zusätzliche Bauteile, wie z.B. ein Stauring, kann entfallen.

Die Erfindung wird nachstehend an Beispielen unter Bezugnahme auf die beigefügte Zeichnung näher erläutert. Darin zeigt:

Fig. 1 eine Axialschnittansicht eines Heizgeräts nach der Erfindung,

Fig. 2 eine Axialschnittansicht eines Heizgeräts gemäß einer zweiten bevorzugten Ausbildungsform der Erfindung, wobei zwei Ausführungsvarianten dargestellt sind.

Fig. 3 eine Axialschnittansicht eines Heizgeräts gemäß einer alternativen Ausführungsvariante mit einem Reflexions-Schalldämpfer.

Fig. 4 eine Axialschnittansicht eines Heizgeräts mit einer Kombination aus Schalldämpfer und katalytischer Verbrennungsgas-Nachbehandlungseinrichtung,

Fig. 5 eine schematische Schnittansicht durch ein Heizgerät mit einer Schalldämpfungseinrichtung gemäß einer anderen Ausbildungsform nach der Erfindung,

Fig. 6 eine Fig. 5 entsprechende Schnittansicht eines Heizgeräts mit einer Ausführungsvariante einer Schalldämpfungseinrichtung, und

Fig. 7 eine Draufsicht auf die Schalldämpfungseinrichtung nach Fig. 6,

Fig. 8 eine schematische Schnittansicht einer weiteren Ausbildungsform eines Heizgeräts mit eingebauter Schalldämpfungseinrichtung.

In den Figuren der Zeichnung sind gleiche oder ähnliche Teile mit denselben Bezugszeichen versehen. Bei den nachstehend erläuterten bevorzugten Ausführungsbeispielen wird die Erfindung anhand eines Luft-Heizgeräts erläutert, das Luft als gasförmigen Wärmeträger hat. Selbstverständlich können in entsprechender Weise auch die erfindungsgemäßen Maßnahmen bei einem mit flüssigem Wärmeträger, wie Wasser, arbeitenden Heizgerät vorgesehen werden. Obgleich ferner bei den nachstehenden Beispielen ein mit flüssigem Brennstoff, wie Benzin oder Diesel, betriebenes Heizgerät dargestellt ist, kann natürlich in entsprechender Weise die erfindungsgemäße Ausbildung auch bei mit gasförmigem Brennstoff betriebenen Heizgeräten verwirklicht werden.

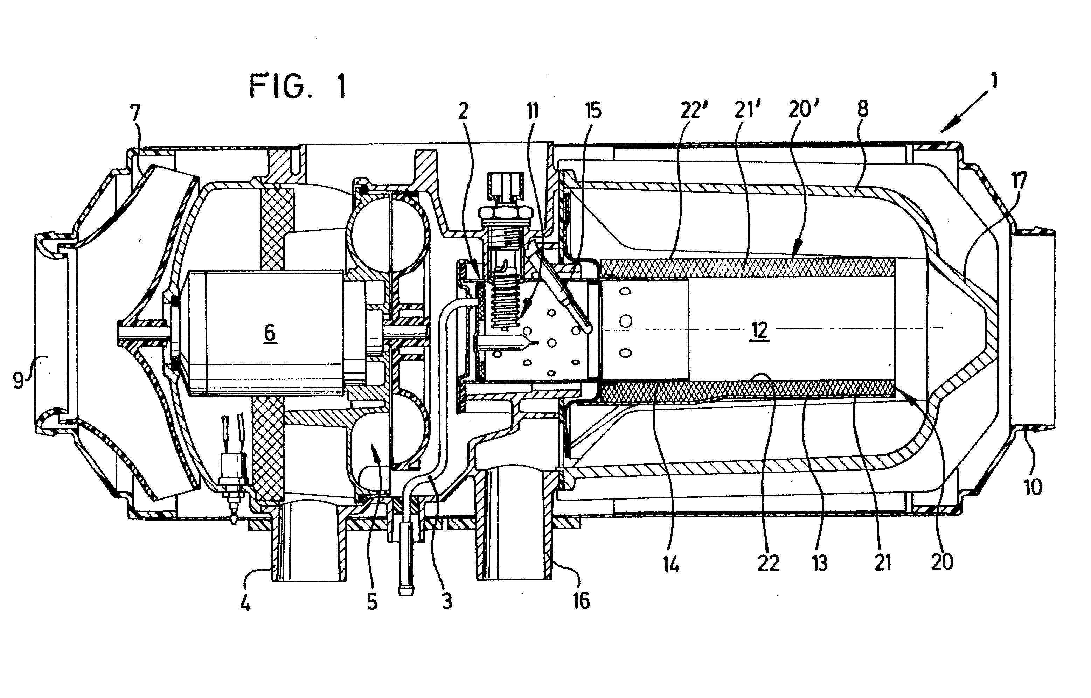

Ein insgesamt mit 1 bezeichnetes Heizgerät weist bei den dargestellten Ausführungsbeispielen nach den Fig. 1 bis 4 einen Brenner 2 auf, dem flüssiger Brennstoff über eine Brennstoffleitung 3 zugeführt wird. Brennluft wird von außen über einen Brennlufteinlaß 4 angesaugt und mittels eines Brennluftgebläses 5, vorzugsweise eines Seitenkanalgebläses, dem Brenner 2 zugeleitet. Zum Antreiben des Brennluftgebläses 5 ist ein Motor 6 vorgesehen, der auch zugleich ein Axiallaufrad 7 antreibt, das als gasförmigen Wärmeträger Luft durch einen Wärmetauscher 8 fördert. Umgebungsluft tritt über einen Einlaß 9 an einem axialen Ende des Heizgeräts 1 ein und diese wird mit Hilfe des Wärmetauschers 8 aufgewärmt und verläßt dann am anderen axialen Ende des Heizgeräts 1 dasselbe über einen Auslaß 10.

Beim dargestellten Beispiel ist der Brenner 2 des Heizgeräts 1 ein Verdampfungsbrenner und mit 11 ist eine Zündeinrichtung bezeichnet, die in eine Brennkammer 12 des Heizgeräts 1 ragt, die von einem Brennrohr 13 begrenzt wird. Konzentrisch im Brennrohr 13, jedoch im Abstand hiervon, ist ein Flammhaltereinsatz 14 in dem Bereich der Brennkammer 12 angeordnet, der in der Nähe des Verdampfungsbrenners des Brenners 2 liegt. Ferner ist mit 15 ein Flammwächter bezeichnet. Das am Brenner 2 gebildete Brenngemisch aus Brennluft und Brennstoff wird mit Hilfe der Zündeinrichtung 11 gezündet und in der Brennkammer 12 wird eine Flamme erzeugt. Der Flammhaltereinsatz 14 dient hierbei zur Bündelung und zur Stützung der Flamme. Die heißen Verbrennungsgase, die hierbei entstehen, verlassen die Brennkammer 12 an dem vom Brenner 2 abgewandten Ende und werden dann etwa in Gegenrichtung umgelenkt und gehen durch den Wärmetauscher 8 durch. Dann verlassen die Verbrennungsgase das Heizgerät 1 nach Durchgang durch den Wärmetauscher 8 über einen Abgasauslaß.

Die vorstehend genannten Einzelheiten eines Heizgeräts 1 sind an sich üblich und es handelt sich hierbei um bei den Ausführungsformen nach den Fig. 1 bis 4 übereinstimmende Teile.

In Fig. 1 der Zeichnung ist eine erste Ausführungsform eines insgesamt mit 20 bezeichneten Schalldämpfers gezeigt, der in der Brennkammer 12 des Heizgeräts 1 ausgebildet ist. Bei dieser Ausbildungsform des Schalldämpfers 20 handelt es sich um einen Absorptions-Schalldämpfer und er wird von einem schalldämmenden Material 21 gebildet, das in Form eines aus hitzebeständigem, gelochtem oder porösem Material bestehenden Vliesrohrs 22 ausgebildet ist. Dieses Vliesrohr 22 ist zweckmäßigerweise an der Innenfläche des Brennrohrs 13 angeklebt. Ferner ist das Vliesrohr 22 hinsichtlich des Durchmessers derart bemessen, daß es den Ringraum zwischen dem Flammhaltereinsatz 14 und dem Brennrohr 13 ausfüllt. Das schalldämmende Material 21 kommt nicht unmittelbar mit der Flamme der Brennkammer 12 in Berührung, sondern es liegt in der heißen Zone der Brennkammer und die heißen Verbrennungsgase überstreichen das schalldämmende Material 21. Hierbei werden die Verbrennungsgeräusche wirksam gedämpft, so daß man auch im Bereich des Abgasauslasses 16 des Heizgeräts 1 ein bereits geräuschgedämpftes Abgas erhält. Somit kann irgendein nicht näher dargestellter aber sonst üblicher externer Abgasschalldämpfer entfallen. Obgleich nicht näher dargestellt ist, kann das schalldämmende Material 21 auch zugleich Katalysatoreigenschaften zur katalytischen Nachbehandlung der Verbrennungsgase und/oder Filtereigenschaften haben, so daß beispielsweise bei einem Brennstoffbetrieb mit Diesel Rußpartikel in den Verbrennungsgasen ausgefiltert werden können. Da sich das schalldämmende Material 21. das gegebenenfalls auch die vorstehend genannten zusätzlichen Eigenschaften haben kann, im heißen Bereich der Brennkammer 12 befindet, können bei den dort herrschenden hohen Temperaturen, die 1000 °C bis 1200°C betragen können, wirksam - schädliche Bestandteile der Verbrennungsgase katalytisch umgewandelt werden und die Verbrennungsgase von Rußpartikeln befreit werden. Aufgrund der hohen dort im Bereich des - schalldämmenden Materials 21 herrschenden Temperatur erhält man einen Selbstreinigungseffekt des schalldämmenden Materials 21 von irgendwelchen Bestandteilen. so daß die Löcher und Poren des - schalldämmenden Materials 21 immer frei sind und eine wirksame Schalldämpfung durch Absorption auch über lange Betriebszeiten des Heizgeräts 1 hinweg gewährleistet werden kann.

In der oberen Hälfte von Fig. 1 ist eine Ausführungsvariante gezeigt, bei der das - schalldämmende Material 21' in Form eines Vliesrohrs 22' unmittelbar die Brennkammerwandbegrenzung bildet, d.h. in Abweichung von der in der unteren Hälfte in Fig. 1 dargestellten Ausführungsform bildet das Vliesrohr 22' zugleich das Brennrohr 13, das dann entfallen kann. Beim in der unteren Hälfte in Fig. 1 dargestellten Beispiel ist das Vliesrohr 22 als gesondertes Bauteil ausgebildet und wie dargestellt fest mit dem Brennrohr 13 verbunden.

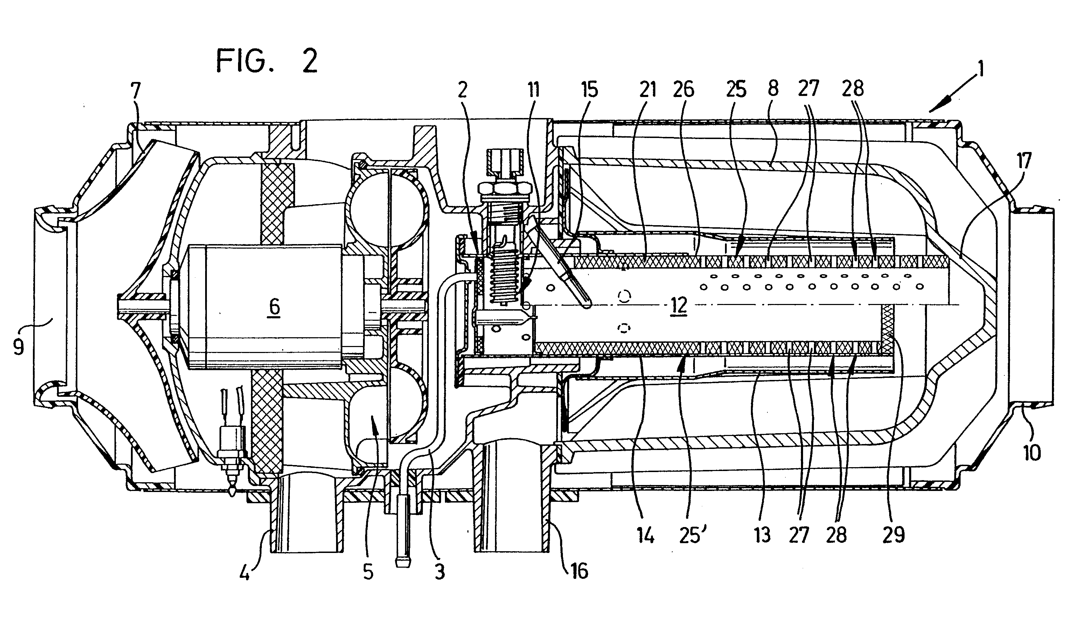

In Fig. 2 sind zwei Ausführungsvarianten eines weiteren Ausführungsbeispieles eines Schalldämpfers 25 bzw. 25' gezeigt. In der oberen Hälfte in Fig. 2 ist ein Schalldämpfer 25 dargestellt, der ähnlich wie bei dem Ausführungsbeispiel nach Fig. 1 von einem Vliesrohr 26 gebildet wird. Dieses Vliesrohr 26 ist an der Innenfläche des Flammhaltereinsatzes 14. zweckmäßigerweise durch Ankleben, angebracht und erstreckt sich von der Nähe des Brenners 2 bis über das Ende des Brennrohrs 13 hinaus und liegt vorzugsweise dicht am Boden 17 des Wärme tauschers 8 an. In dem heißen, aber flammenfreien Bereich der Brennkammer 12 weist der Schalldämpfer 25 radial verlaufende Durchgangsöffnungen bzw. Löcher 27 auf, die beim dargestellten Beispiel in mehreren axial beabstandeten Öffnungsreihen 28 in Umfangsrichtung des Vliesrohrs 26 verteilt angeordnet sind. Hierbei können beispielsweise in Umfangsrichtung versetzt acht derartige Öffnungsreihen 28 angeordnet sein, so daß die Öffnungen 27 benachbarter Öffnungsreihen 28 in Umfangsrichtung versetzt zueinander liegen. Da das Vliesrohr 26 dicht am Boden 17 des Wärmetauschers 8 anliegt. werden am Austrittsende der Brennkammer 12 die Verbrennungsgase gezwungen, durch die Öffnungen 27 durchzugehen. bevor sie zu dem Wärmetauscher 8 gelangen. Durch eine entsprechende Wahl der Größe und Anordnung der Öffnungen 27 sowie der entsprechenden Anordnung der Öffnungsreihen 28 kann ein solcher Schalldämpfer 25 sowohl eine Schalldämpfung durch Reflexion als auch durch Absorption bewirken, so daß man eine äußerst wirksame Schalldämpfung erreicht.

Der in der unteren Hälfte in Fig. 2 dargestellte Schalldämpfer 25' unterscheidet sich von dem vorangehend erläuterten Schalldämpfer 25 im wesentlichen dadurch, daß das Austrittsende des Brennrohrs 13 mittels einer Scheibe 29 verschlossen ist. so daß die Verbrennungsgase entweder durch das poröse schalldämmende Material 21 der Scheibe 29 und/oder durch die Öffnungen 27 des Vliesrohrs 26 durchgehen müssen. Hierbei hat das Vliesrohr 26 eine axiale Länge, die um die Dicke der Scheibe 29 kürzer als die axiale Länge des Brennrohrs 13 ist. Auch hierbei kann natürlich das - schalldämmende Material 21 katalytische Eigenschaften zur Nachbehandlung von Verbrennungsgasen und/oder Filtereigenschaften zur Ausfilterung von Rußpartikeln haben.

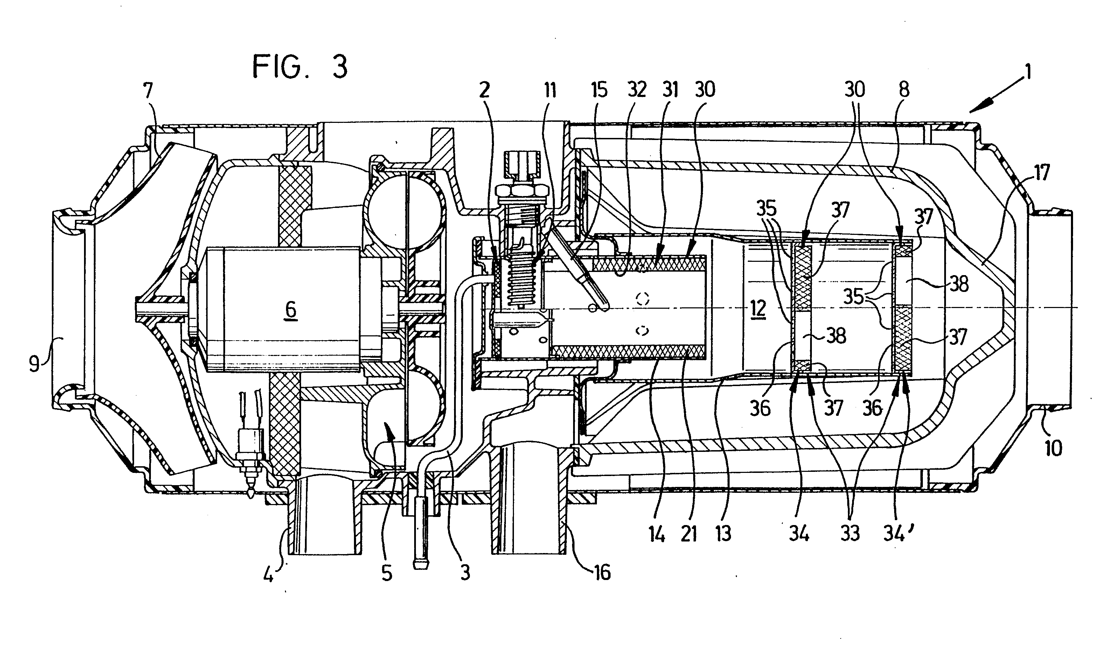

Bei der in Fig. 3 dargestellten Ausführungsvariante ist der Schalldämpfer insgesamt mit 30 bezeichnet. Dieser Schall dämpfer hat einerseits ein erstes Schalldämpferteil 31. das beim dargestellten Ausführungsbeispiel an der Innenfläche des Flammhaltereinsatzes 14 in Form eines Vliesrohrs 32 angebracht ist. Dieser erste Schalldämpferteil 31 wirkt als Absorptionsschalldämpfer, ähnlich wie bei der Ausbildungsform nach Fig. 1 beispielsweise. Ein zweites Schalldämpferteil 33 des Schalldämpfers 30 ist im Bereich der heißen Zone des Rennrohrs 13 angeordnet und dieser Schalldämpferteil wirkt als Reflexions-Schalldämpfer. Das zweite Schalldämpferteil 33 umfaßt beim dargestellten Beispiel zwei axial im Abstand angeordnete Schalldämpfereinsätze 34, 34', die sich über den Querschnitt des Brennrohrs 13 erstrecken. Jeder Schalldämpfereinsatz 34. 34' hat einen mit axialen Durchgangsöffnungen 35 versehenen Halter 36, der als Lochblech ausgebildet ist. Als - schalldämmendes Material 21 ist auf diesem Halter 36 Vlieswolle 37 aufgebracht, und zwar derart, daß ein oder mehrere über die Querschnittsfläche verteilte, axiale Durchgangsöffnungen 38 vorhanden sind. Hierbei handelt es sich um Bereiche, an denen der als Lochblech ausgebildete Halter 36 frei von Vlieswolle 37 ist. Die axialen Durchgangsöffnungen 38 am Schalldämpfereinsatz 34 sind auf der Querschnittsfläche achsversetzt zu den axialen Durchgangsöffnungen 38 des Schalldämpfereinsatzes 34' angeordnet. Zweckmäßigerweise liegt der Schalldämpfereinsatz 34' am Austrittsende des Brennrohrs 13 und verschließt dieses.

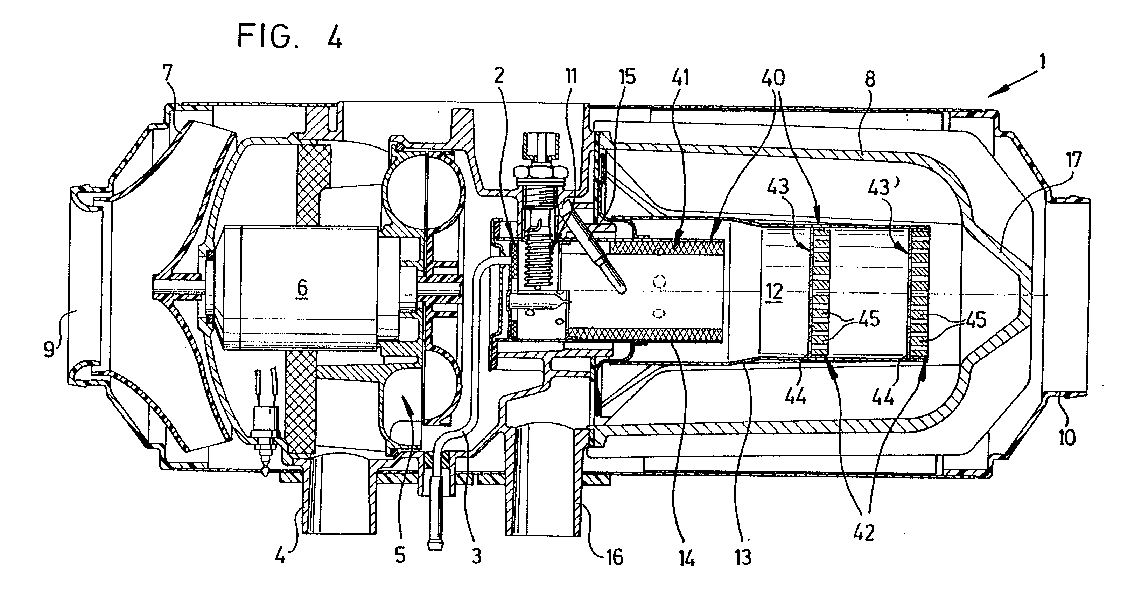

In Fig. 4 ist eine Ausführungsvariante zu dem Schalldämpfer nach Fig. 3 gezeigt. die in Fig. 4 insgesamt mit 40 bezeichnet ist. Wie bei Fig. 3 hat auch der Schalldämpfer 40 nach Fig. 4 ein erstes Schalldämpferteil 41. das weitgehend mit dem vorangehenden bereits in Fig. 3 erläuterten ersten Schalldämpferteil 31 übereinstimmt. Ein zweites Schalldämpferteil 42 in Fig. 4 wirkt ähnlich wie das zweite Schalldämpfer 33 in Fig.3 als Reflexions-Schalldämpfer. Auch hierbei sind ähnlich wie bei Fig. 3 zwei Schalldämpfereinsätze 43, 43' axial im Abstand liegend im Innern des Brennrohrs 13 angeordnet. Als Halter 44 für die Schalldämpfer 43, 43' dient wie bei Fig. 3 ein entsprechend ausgebildetes Lochblech. Bei dem Schalldämpfereinsatz 43, 43' ist als schalldämpfendes Material ein katalytischer Werkstoff oder eine Kombination von katalytischem Werkstoff und schalldämmendem Material vorgesehen, wobei diese Materialien insgesamt mit 45 bezeichnet sind. Hierbei hat somit das zweite Schalldämpferteil 42 zugleich die Funktion einer katalytischen Verbrennungsgasreinigung, die äußerst wirksam ist und, da die katalytische Umwandlung bei relativ hohen Temperaturen erfolgen kann. Anstelle des katalytischen Werkstoffes kann natürlich auch beispielsweise Rußfiltermaterial verwendet werden, wenn das Heizgerät mit Diesel als Brennstoff betrieben wird, so daß das zweite Schalldämpferteil 42 zugleich als Rußfilter dient.

Wie die vorstehenden Ausführungen gezeigt haben, sind beim erfindungsgemäßen Heizgerät 1 verschiedene Ausbildungsformen von Schalldämpfern 20, 25, 25', 30, 40 vorgesehen, denen allen gemeinsam ist. daß sie in der Brennkammer 12 des Heizgeräts 1 angeordnet sind. Somit werden die Verbrennungsgeräusche, die bei der Verbrennung in der Brennkammer 12 unvermeidbar entstehen. unmittelbar in der Nähe des Entstehungsortes wirksam gedämpft, so daß externe Schalldämpfereinrichtungen entfallen können und das Heizgerät 1 insgesamt gesehen sehr leise arbeitet. Wie bereits erläutert worden ist, kann das schalldämmende Material 21 in sich auch noch die Eigenschaften eines Katalysators zur katalytischen Nachbehandlung der Verbrennungsgase vereinen oder es können gegebenenfalls hierzu bei den Schalldämpfern zusätzliche Maßnahmen unter Verwendung von katalytischen Werkstoffen 45 beispielsweise getroffen werden. In entsprechender Weise kann das schalldämmende Material 21 auch Rußfiltereigenschaften haben, um die Rußpartikel aus den Verbrennungsgasen auszufiltern oder es können zusätzliche Maßnahmen hierfür vorgesehen sein. so daß man mit Hilfe der erfindungsgemäßen Auslegung des Heizgeräts 1 sowohl eine Schalldämpfung erzielen als auch die Verbrennungsgase weitgehend von schädlichen Bestandteilen befreien kann.

Selbstverständlich ist die Erfindung nicht auf die vorangehend erläuterten Beispiele beschränkt. sondern es können in Abhängigkeit von dem vorhandenen Platz in der Brennkammer 12 auch einzelne schalldämmende Maßnahmen aus den vorangehenden Beispielen miteinander kombiniert werden.

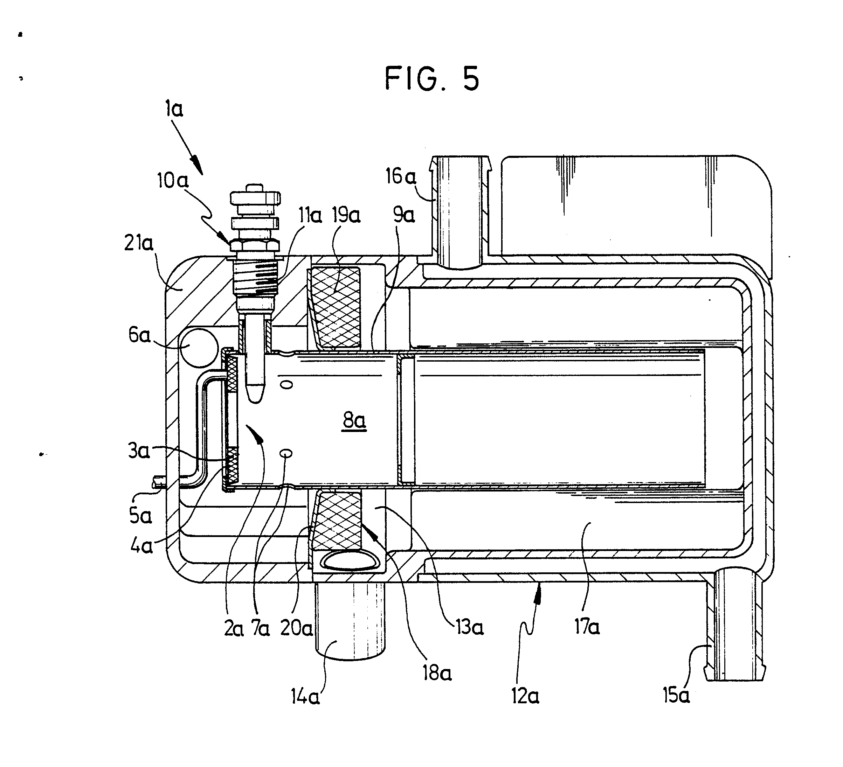

In Fig. 5 der Zeichnung ist ein insgesamt mit 1a bezeichnetes Heizgerät, das als Fahrzeugzusatzheizgerät dient, in einer Axialschnittansicht gezeigt. Auf der in der Zeichnung links liegenden Brennerkopfseite des Heizgeräts 1a ist als Beispiel eines Brenners ein Verdampfungsbrenner 2a gezeigt. Der Verdampfungsbrenner 2a weist einen saugfähigen Körper 3a auf einem Träger 4a auf. Dem Verdampfungsbrenner 2a wird Brennstoff über eine schematisch dargestellte Brennstoffzufuhr leitung 5a zugeführt. Brennluft tritt über eine Öffnung 6a in den Raum um den Verdampfungsbrenner 2a ein und gelangt über weitere Öffnungen 7a an einem eine Brennkammer 8a begrenzenden Brennrohr 9a in den Brennraum der Brennkammer 8a in der Nähe des saugfähigen Körpers 3a. Die Brennluft vermischt sich mit dem vom Verdampfungsbrenner 2a gelieferten Brennstoffdampf und es wird ein Brenngemisch um den saugfähigen Körper 3a gebildet. Mit Hilfe einer Zündeinrichtung 10a, die beim dargestellten Beispiel vorzugsweise von einer Stabglühkerze 11a gebildet wird, wird das Brenngemisch in der Brennkammer 8a gezündet und verbrannt. Am vom Verdampfungsbrenner 2a gegenüberliegenden Ende der Brennkammer 8a treten die hierbei gebildeten heißen Verbrennungsgase aus und werden an ihrer Strömungsrichtung um etwa 180° umgelenkt. Diese heißen Verbrennungsgase überstreichen einen Wärmetauscher 12a und gelangen dann nach Durchgang durch den Wärmetauscher 12a in einen Abgassammelraum 13a und von dort aus treten sie über einen Abgasauslaßstutzen 14a des Heizgeräts 1a aus. Das Wärmetauschermedium bzw. der Wärmeträger im Wärmetauscher 12a tritt über einen Einlaß 15a am einen axialen Ende des Wärmetauschers 12a ein und über ein in der Nähe des gegenüberliegenden axialen Endes des Wärmetauschers 12a vorgesehenen Auslaß 16a aus. Als Wärmeträger kommen gasförmige oder flüssige Medien in Betracht. Der Wärmetauscher 12a hat auf der dem Verbrennungsgasstrom zugewandten Seite über den Umfang verteilt angeordnete Rippen 17a, die den Verbrennungsgasstrom in parallel gerichtete axiale Teilgasströme unterteilen.

Im Abgassammelraum 13a ist ein insgesamt mit 18a bezeichneter Schalldämpfer vorgesehen. Dieser wird bei dem bevorzugten und dargestellten Ausführungsbeispiel von einem schalldämmenden Material 19a gebildet. das die Form einer Ringscheibe hat und mit dieser eines Halters 20a im Abgassammelraum 13a gehalten ist. Dieser Halter 20a umgreift das schalldämmende Material 19a an wenigstens zwei Seiten. Vorzugsweise liegt der Halter 20a einerseits am Brennkopfteil 21a und andererseits an der Außenfläche des Brennrohrs 9a an.

Obgleich nicht näher dargestellt ist, können in dem schalldämmenden Material Öffnungen beispielsweise in Form von Bohrungen vorgesehen sein, die in axialer Verlängerung zu den zwischen zwei benachbarten Rippen 17a gebildeten Teilgasströmen liegen. Hierbei kann eine Schalldämpfung unter kombinierter Ausnutzung der Absorption und Reflexion bewirkt werden.

Natürlich kann auch der Abgassammelraum 13a zusätzlich noch in entsprechender Weise so gestaltet werden, daß man beispielsweise noch ergänzend eine Schalldämpfung unter Ausnutzung eines Hohlraumresonators erreichen kann.

Da bei dem dargestellten Beispiel des Heizgeräts 1a der schalldämpfer 18a im Heizgerät 1a, und zwar im Bereich des Abgassammelraums 13a, integriert ist, braucht in der nicht näher dargestellten und sich an den Abgasauslaßstutzen 14a anschließenden Abgasleitung kein Schalldämpferbauteil vorgesehen zu sein.

Somit vereinfacht sich der Einbau eines solchen Heizgeräts 1a beispielsweise in ein Fahrzeug und zudem lassen sich die Kosten für ein derartiges gesondertes Schalldämpferbauteil einsparen.

Bei dem erfindungsgemäßen Heizgerät 1a werden in der Brennkammer 8a die heißen Verbrennungsgase erzeugt und treten am vom Verdampfungsbrenner 2a gegenüberliegenden Ende aus der Brennkammer 8a aus. Dort werden sie umgelenkt und gehen durch den Wärmetauscher 12a. Nach dem Durchgang durch den Wärmetauscher 12a sammeln sich dann die abgekühlten Verbrennungsgase im Abgassammelraum 13a und dort werden unmittelbar die Verbrennungsgasgeräusche durch den Schalldämpfer 18a gedämpft, bevor sie das Heizgerät 1a über den Abgasauslaßstutzen 14a verlassen. Daher kann ein derartiges Heizgerät 1a äußerst geräuscharm arbeiten, da die Abgasgeräusche bereits im Heizgerät 1a gedämpft werden.

Obgleich bei dem dargestellten Beispiel das schalldämmende Material 19a in Form einer Ringscheibe ausgebildet ist, kann das schalldämmende Material auch irgendeine andere Form aufweisen oder es können ein oder mehrere schalldämmende Materialteile im Abgassammelraum 13a angeordnet werden. Auch ist die Ausbildung des Abgassammelraumes 13a nicht auf das dargestellte Ausführungsbeispiel beschränkt, sondern auch diesem Abgassammelraum 13a können hiervon abweichende Dimensionen und oder Formen gegeben werden. Da sich die Verbrennungsgase bereits beim Durchgang durch den Wärmetauscher 12a abgekühlt haben, genügt es bei der Verwendung von schalldämmendem Material 19a im Abgassammelraum 13a ein solches zu verwenden, das zwar wärmebeständig ist, das aber nicht hoch hitzebeständig zu sein braucht.

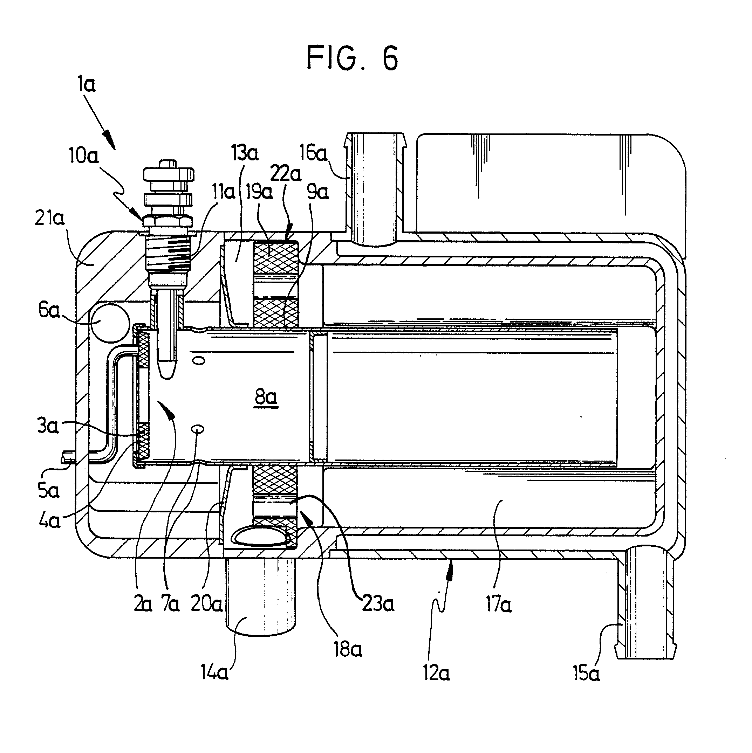

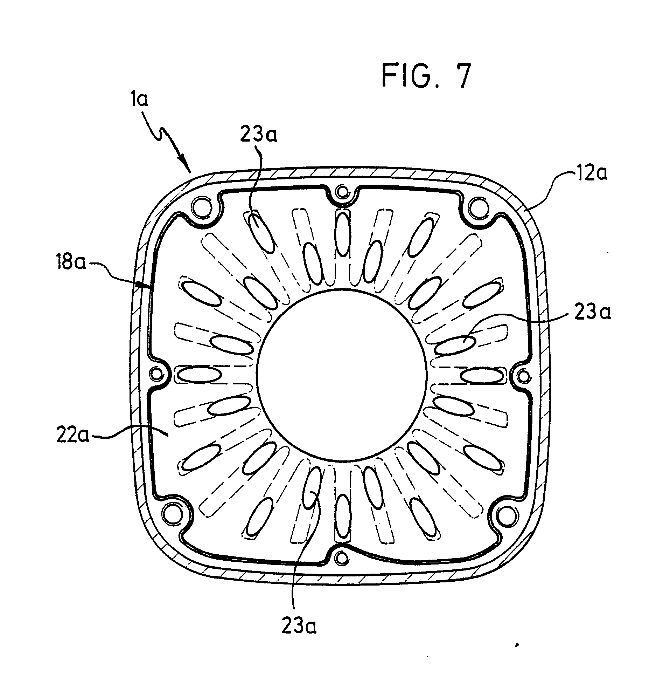

In den Fig. 6 und 7 sind gleiche oder ähnliche Teile wie bei der Ausbildungsform nach Fig. 5 mit denselben Bezugszeichen versehen. Die Schalldämpfungseinrichtung 1a' in Fig.6 weist als schalldämmendes Material 19a eine Scheibe 22a auf, die direkt an der dem Wärmetauscher 12a zugewandten Wandung des Abgassammelraumes 13a anliegt. Die Scheibe 22a weist mehrere Öffnungen 23a auf, die in axialer Richtung die Scheibe 22a durchsetzen und über die Querschnittsfläche verteilt sind. Die Öffnungen 23a brauchen nicht unbedingt eine Kreisform zu haben, sondern können auch oval oder dergleichen ausgelegt sein. Wie aus Fig. 6 zu ersehen ist, liegt das schalldämmende Material 19a in Form der Scheibe 22a beispielsweise direkt am Austrittsende des Wärmetauschers 12a an (siehe rechts in Fig.6). Hierbei ist das schalldämmende Material 19a im Bereich des Abgasauslasses 16 aus dem Abgassammelraum 13a ausgenommen oder abgesetzt, so daß die Abgase ungehindert austreten können.

Aus Fig. 7 ist eine bevorzugte Anordnung oder Verteilung der axialen Öffnungen 23a zu ersehen. Hierbei sind die Öffnungen 23a auf zwei konzentrischen Kreisen jeweils in regelmäßigen Umfangsabständen zueinander angeordnet. Vorzugsweise sind die innenliegenden Öffnungen 23a in der Scheibe 22a jedoch zu den weiter außen Liegenden versetzt, so daß man eine größere Stegbreite zwischen benachbarten Öffnungen 23a erhält und der Zusammenhalt und die Formhaltigkeit der Schalldämpfungseinrichtung 1a' gewährleistet sind.

Die Außenkontur der Scheibe 22a ist hierbei an die Querschnittsform des dem Brenner 2a zugewandten Endes des Wärmetauschers 12a angepaßt, so daß diese Scheibe 22a zuverlässig festgelegt sein kann, ohne daß man zusätzliche Halte- und/oder Befestigungseinrichtungen benötigt. Natürlich können auch mehrere solcher Scheiben 22a zur Bildung der Schalldämpfungs einrichtung 1a' in axialer Richtung hintereinander angeordnet werden, wobei man auch unterschiedliche schalldämmende Materialien in zweckmäßiger Weise miteinander kombinieren kann. Die Wahl der Anzahl von vorgesehenen Öffnungen 23a kann auf den jeweiligen Anwendungszweck abgestimmt werden und es ist keine Beschränkung auf die dargestellte Anzahl von Öffnungen beabsichtigt.

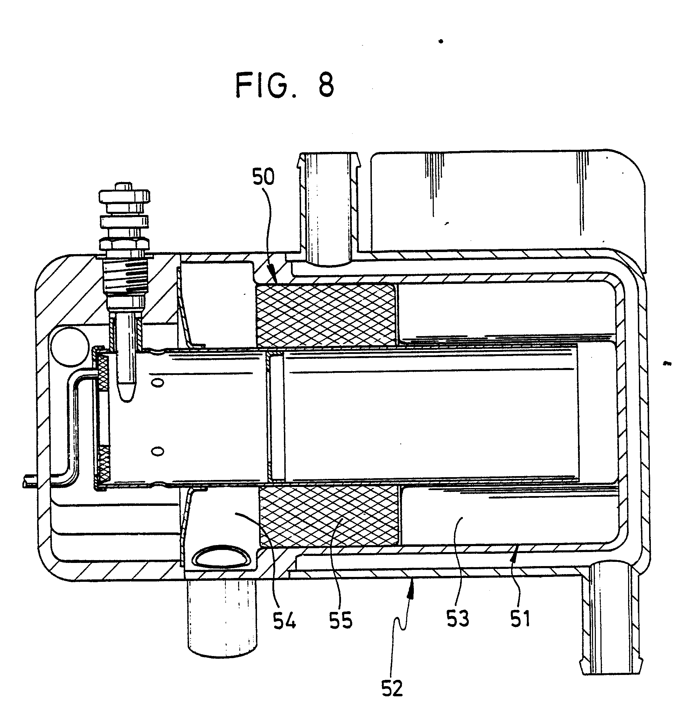

Fig. 8 zeigt eine Ausführungsvariante, bei der der Schalldämpfer insgesamt mit 50 bezeichnet ist. Hierbei erstrecken sich die die Verbrennungsgaskanäle 51 am Wärmetauscher 52 begrenzenden Rippen 53 nicht bis zum Abgassammelraum 54, sondern der ohnedies für den Wärmeaustausch nicht so bedeutsame Teil desselben wird gekürzt. In den so gebildeten Zwischenraum 55 wird dann der Schalldämpfer 50 formschlüssig und/oder kraftschlüssig eingesetzt und ermöglicht eine wirksame Schalldämpfung. Obgleich nicht näher dargestellt ist, können gegebenenfalls wenigstens eine oder mehrere Rippen in axialer Richtung verlängert sein, so daß der Schalldämpfer 50 im Zwischenraum 55 ohne zusätzliche Halter fixiert werden kann. Der so vorgesehene Schalldämpfer 50 kann eine Schalldämpfung, basierend auf den Prinzipien der Reflexion und/oder Absorption und/oder nach Helmholtz unter Verwendung eines Hohlraumresonators bewirken. Hierbei können die Schalldämpfungsmethoden einzeln oder in Kombination verwirklicht werden.

Bezugszeichenliste

1 Heizgerät insgesamt
1a Heizgerät in den Fig. 5 bis 7
1a' Schalldämpfungseinrichtung
2 Brenner
2a Verdampfungsbrenner in den Fig. 5 bis 7
3 Brennstoffleitung
3a Saugfähiger Körper in den Fig. 5 bis 7
4 Brennlufteinlaß
4a Träger
5 Brennluftgebläse
5a Brennstoffzufuhrleitung
6 Motor
6a Öffnung für Brennluft
7 Axiallaufrad
7a Öffnung im Brennrohr 9a
8 Wärmetauscher
8a Brennkammer
9 Einlaß
9a Brennrohr
10 Auslaß
10a Zündeinrichtung
11 Zündeinrichtung
11a Stabglühkerze
12 Brennkammer
12a Wärmetauscher
13 Brennrohr
13a Abgassammelraum
14 Flammhaltereinsatz
14a Abgasauslaßstutzen
15 Flammwächter
15a Einlaß für Wärmeträger
16 Abgasauslaß
16a Auslaß für Wärmeträger
17 Boden von Wärmetauscher 8
17a Rippen
18a Schalldämpfer insgesamt
19a Schalldämmendes Material
20 Schalldämpfer in Fig. 1
20a Halter
21 Schalldämmendes Material
21a Brennerkopfteil

22 Vliesrohr
22a Scheibe in Fig. 6 und 7
23a Öffnungen in Fig. 6 und 7
25 Schalldämpfer in Fig. 2 oben
25' Schalldämpfer in Fig. 2 unten
26 Vliesrohr
27 Durchgangsöffnungen
28 Öffnungsreihen
29 Scheibe bei Schalldämpfer 25'
30 Schalldämpfer in Fig. 3
31 Erstes Schalldämpferteil
32 Vliesrohr
33 Zweites Schalldämpferteil
34 Schalldämpfereinsatz
34' Schalldämpfereinsatz
35 Axiale Durchgangsöffnungen im Halter 36
36 Halter
37 Vlieswolle
38 Axiale Durchgangsöffnung
40 Schalldämpfer in Fig. 4
41 Erstes Schalldämpferteil
42 Zweites Schalldämpferteil
43 Schalldämpfereinsatz
43' Schalldämpfereinsatz
44 Halter
45 Katalytischer Werkstoff
50 Schalldämpfer insgesamt in Fig. 8
51 Verbrennungsgaskanäle
52 Wärmetauscher
53 Rippen
54 Gassammelraum
55 Zwischenraum

**Ansprüche**

1. Heizgerät, insbesondere Fahrzeugzusatzheizgerät, mit einem Brenner und einer Brennkammer, die von einem Brennrohr begrenzt ist, dadurch **gekennzeichnet,** daß im Heizgerät (1, 1a) ein Schalldämpfer (20, 25, 25', 30, 40, 18a, 50) eingebaut ist.

2. Heizgerät nach Anspruch 1, dadurch gekennzeichnet, daß die Brennkammer (12) als Schalldämpfer (20, 25, 25', 30, 40) ausgebildet ist.

3. Heizgerät nach Anspruch 1 oder 2, dadurch gekennzeichnet, daß der Schalldämpfer (20, 25, 30, 40) zugleich die Verbrennungsgase katalytisch reinigt.

4. Heizgerät nach Anspruch 1 oder 2 dadurch gekennzeichnet, daß der Schalldämpfer (20, 25, 30, 40) bei einem mit Diesel-Brennstoff betriebenen Heizgerät Rußpartikel aus den Verbrennungsgasen ausfiltert.

5. Heizgerät nach einem der vorangehenden Ansprüche. dadurch gekennzeichnet. daß der Schalldämpfer (25, 30. 40) als ein Reflexions-Schalldämpfer ausgebildet ist.

6. Heizgerät nach einem der vorangehenden Ansprüche, dadurch gekennzeichnet. daß der Schalldämpfer (20, 25, 31. 41) als Absorptions-Schalldämpfer ausgebildet ist.

7. Heizgerät nach einem der vorangehenden Ansprüche, dadurch gekennzeichnet, daß der Schalldämpfer (20. 25. 30, 40) aus hitzebeständigem, gelochtem oder porösem Material besteht.

8. Heizgerät nach einem der vorangehenden Ansprüche. bei dem in der Brennkammer ein Flammhaltereinsatz vorgesehen ist. dadurch gekennzeichnet, daß der Schalldämpfer (20. 25. 31. 41) von einer Auskleidung des Brennrohrs (13) und/oder des Flammhaltereinsatzes (14) gebildet wird.

9. Heizgerät nach Anspruch 8, dadurch gekennzeichnet, daß die Auskleidung von einem Vliesrohr (22. 26, 32) gebildet wird.

10. Heizgerät nach Anspruch 9, dadurch gekennzeichnet, daß das Vliesrohr (26) in axialer Richtung über das offene Ende des Brennrohrs (13) hinaus verlängert ist.

11. Heizgerät nach einem der Ansprüche 8 bis 10. dadurch gekennzeichnet, daß die Auskleidung wenigstens im Bereich des Brennkammerauslaßendes mit radialen und in Umfangsrichtung verteilten Durchgangsöffnungen (27) versehen ist.

12. Heizgerät nach Anspruch 11, dadurch gekennzeichnet, daß die radialen Durchgangsöffnungen (27) in mehreren axial beabstandeten Öffnungsreihen (28) angeordnet sind.

13. Heizgerät nach Anspruch 12, dadurch gekennzeichnet, daß die Durchgangsöffnungen (27) benachbarter Öffnungsreihen (28) in Umfangsrichtung versetzt zueinander angeordnet sind.

14. Heizgerät nach einem der Ansprüche 1 bis 8, dadurch gekennzeichnet, daß der Schalldämpfer (30, 40) von ein oder mehreren im Bereich des Brennrohrs (13) angeordneten Schalldämpfereinsätzen (34. 34', 43, 43') gebildet wird, die sich über den Querschnitt des Brennrohrs (13) erstrecken.

15. Heizgerät nach Anspruch 14, dadurch gekennzeichnet. daß der oder jeder Schalldämpfereinsatz (34, 34', 43, 43') ein oder mehrere über die Querschnittsfläche verteilte axiale Durchgangsöffnungen (38) hat.

16. Heizgerät nach Anspruch 15, dadurch gekennzeichnet. daß die axialen Durchgangsöffnungen (38) benachbarter Schalldämpfereinsätze (34. 34'. 43. 43') versetzt zueinander angeordnet sind.

17. Heizgerät nach einem der Ansprüche 14 bis 16. dadurch gekennzeichnet, daß der oder jeder Schalldämpfereinsatz (34. 34'. 43. 43') ein mit axialen Durchgangsöffnungen (35) versehenes Lochblech als Halter (36. 44) und darauf angebrachtes schalldämmendes Material (21) umfaßt.

18. Heizgerät nach Anspruch 17. dadurch gekennzeichnet. daß das schalldämmende Material (21) Vlieswolle (37) ist.

19. Heizgerät nach einem der Ansprüche 14 bis 18. dadurch gekennzeichnet, daß das schalldämmende Material (21) zugleich die durchströmenden Verbrennungsgase katalytisch behandelt.

20. Heizgerät nach Anspruch 19, dadurch gekennzeichnet. daß Schichten aus schalldämmendem Material (21) und Schichten aus katalytischem Werkstoff (45) über die Querschnittsfläche verteilt angeordnet sind.

21. Heizgerät nach einem der vorangehenden Ansprüche, dadurch gekennzeichnet. daß das schalldämmende Vliesmaterial (21) am Brennrohr (13) und/oder am Flammhaltereinsatz (14) und/oder dem Halter (36, 44) befestigt. vorzugsweise angeklebt ist.

22. Heizgerät, bei dem die heißen Verbrennungsgase aus der Brennkammer austreten. durch Verbrennungsgaskanäle eines Wärmetauschers gehen und in einen Abgassammelraum in Höhe des Brenners vor dem Austritt aus dem Heizgerät über einen Verbrennungsgasauslaß gelangen. nach Anspruch 1, dadurch gekennzeichnet, daß der Abgassammelraum (13a) als Schalldämpfer (18a) ausgebildet ist.

23. Heizgerät nach Anspruch 22, dadurch gekennzeichnet. daß der Schalldämpfer (18a), basierend auf Reflexion und/oder Absorption und/oder ähnlichen Schalldämpfungsprinzipien, arbeitet.

24. Heizgerät nach Anspruch 22 oder 23, dadurch gekennzeichnet, daß schalldämmendes Material (19a) im Abgassammelraum (13a) vorgesehen ist.

25. Heizgerät nach Anspruch 24. dadurch gekennzeichnet, daß das schalldämmende Material (19a) in Form einer Ringscheibe (22a) ausgebildet ist.

26. Heizgerät nach einem der Ansprüche 22 bis 25. dadurch gekennzeichnet. daß der Schalldämpfer (18a) direkt am Austrittsende des Wärmetauschers (12a) anliegt.

27. Heizgerät nach Anspruch 24 oder 25. dadurch gekennzeichnet. daß das schalldämmende Material (19a) an der vom Wärmeübertrager bzw. Wärmetauscher (12a) abgewandten Wand des Abgassammelraums (13a) anliegt und in axialer Richtung zum Wärmetauscher (12a) beabstandet ist.

28. Heizgerät nach einem der Ansprüche 24 bis 27, dadurch gekennzeichnet, daß das schalldämmende Material (19a) mit Öffnungen (23a) versehen ist, die in axialer Verlängerung zu den Verbrennungsgaskanälen des Wärmetauschers (12a) verlaufen.

29. Heizgerät nach einem der Ansprüche 24 bis 28, dadurch gekennzeichnet, daß das - schalldämmende Material (19a) an einem Halter (20a) angebracht ist, der in den Abgassammelraum (13a) ragt.

30. Heizgerät, bei dem die aus der Brennkammer austretenden heißen Verbrennungsgase durch von über den Umfang verteilten Rippen gebildete Verbrennungsgaskanäle eines Wärmetauschers strömen, nach einem der Ansprüche 1 bis 7, dadurch gekennzeichnet, daß der Schalldämpfer (50) unmittelbar am Austritt der Verbrennungsgase aus den Verbrennungsgaskanälen (51) angeordnet ist.

31. Heizgerät nach Anspruch 30, dadurch gekennzeichnet, daß die die Verbrennungsgaskanäle (51) begrenzenden Rippen (53) an den dem Abgasauslaß zugewandten Enden verkürzt sind und der so gebildete Zwischenraum als Aufnahme für den Schalldämpfer (50) dient.

32. Heizgerät nach Anspruch 30 oder 31, dadurch gekennzeichnet, daß wenigstens eine der Rippen (53) zur Fixierung des Schalldämpfers (50) in axialer Richtung verlängert ist.

FIG. 1

FIG. 2

FIG. 3

FIG. 4

0 287 923

# FIG. 5

# FIG. 6

## FIG. 7

# FIG. 8